# EUROPÄISCHE PATENTANMELDUNG

(11) **EP 4 538 201 A1**
(43) Veröffentlichungstag der Anmeldung: **16.04.2025**
(21) Anmeldenummer: 24201571.7
(22) Anmeldetag: 20.09.2024
(51) Int. Cl.: B65G 9/00, E01F 13/04, E06B 11/02, E01F 13/06

(54) **ANTRIEB FÜR SCHRANKENANLAGE**

(30) Priorität: 13.10.2023 DE 102023128030
(71) Anmelder: BelFox Torautomatik GmbH, 36148 Kalbach (DE)
(72) Erfinder: BEQIRAJ, Rrezarta, 36119 Neuhof Kr Fulda (DE); Rommel, Matthias, 36157 Ebersburg (DE); Broßmann, Jens, 36119 Neuhof Kr Fulda (DE)
(74) Vertreter: Alpspitz IP

(57) **Zusammenfassung**

Eine Antriebseinheit (10) für einen faltbaren Sicherheitsschrankenbaum (100) , enthält einen Antriebsmotor (12), insbesondere mit Bremse (13); eine Gewindespindel (16), die mit dem Antriebsmotor (12) derart gekoppelt ist, dass die Rotationsbewegung des Ausgangs des Antriebsmotors (12) auf die Gewindespindel (16) übertragen wird, und die mit einer Spindelmutter (18) derart gekoppelt ist, dass sie bei einer Rotation der Gewindespindel (16) eine lineare Bewegung entlang einer Schlittenführung (21) ausführt; einen Schlitten (20), der mit der Spindelmutter (18) fest verbunden ist; und ein Kopplungsgelenk (27), insbesondere eine Koppelstange (27), das gelenkig am Schlitten (20) angebracht ist, zum gelenkigen Koppeln des Schlittens (20) mit einem Schrankenarm (110) des Sicherheitsschrankenbaums (100).

## Beschreibung

### Gebiet der Erfindung

Die Erfindung betrifft eine Antriebseinheit für eine Schrankenanlage, insbesondere eine Antriebseinheit für einen faltbaren Sicherheitsschrankenbaum, und einen Sicherheitsschrankenbaum mit einer Antriebseinheit.

### Stand der Technik

In Industrieumgebungen werden Arbeitsbereiche, Laderampen für LKW, etc. mit Rammschutzprodukten und Sicherheitsabsperrungen gesichert, um Gefahren, wie Abstürze, unbeabsichtigtes Eindringen in Fahrwege von Lagerfahrzeugen etc. für Mitarbeiter zu vermeiden. Solche Sicherheitsabsperrungen sind aus flexiblem Kunststoff als Poller, Tore, etc. ausgebildet und halten mechanischen Belastungen, wie z.B. Kollisionen mit Gabelstaplern in einem hohen Maß ohne Beschädigung stand.

Dabei gibt es Sicherheitsabsperrungen, die wegklappbar oder schwenkbar sind, um nach Bedarf den Durchgang oder die Durchfahrt in einen Bereich zu ermöglichen. D.h. solche Sicherheitsabsperrungen sind als zu öffnende und zu schließende Schrankenanlage ausgebildet, wenngleich sie weiterhin die Eigenschaften allgemeiner Sicherheitsabsperrungen, wie die Belastbarkeit gegenüber mechanischer Beanspruchung, aufweisen. Der Öffnungs- und Schließvorgang solcher Schrankenanlagen erfolgt dabei manuell, d.h. die Schranke wird manuell gehoben oder gesenkt bzw. geschwenkt, um einen Durchgang freizugeben oder zu schließen.

Dies führt zu Unterbrechungen im Arbeitsfluss, um die Schrankenanlage bzw. einen Schrankenbaum manuell zu öffnen und zu schließen.

Aus der CN 1 12 081 033 A ist ein Torantrieb für insbesondere ein Schwingtor bekannt, bei dem ein Antriebsmotor und eine Gewindespindel vorgesehen sind. Die Gewindespindel ist mit dem Antriebsmotor derart gekoppelt ist, dass die Rotationsbewegung des Ausgangs des Antriebsmotors auf die Gewindespindel übertragen wird, und ist ferner mit einer Spindelmutter derart gekoppelt, dass sie bei einer Rotation der Gewindespindel eine lineare Bewegung entlang einer Schlittenführung ausführt. Ein Schlitten, der mit der Spindelmutter fest verbunden ist, ist vorgesehen. An dem Schlitten ist ein Kopplungsgelenk gelenkig am Schlitten angebracht, zum gelenkigen Koppeln des Schlittens mit einem Schrankenarm des Schwingtors. Eine Kupplung kann zwischen der Gewindespindel und dem Antriebsmotor vorgesehen sein.

Die DE 195 17 592 A1 beschreibt einen Kugelspindeltrieb zum Verschwenken eines Schrankenbaums.

Aus der DE 20 2008 011 200 U1 ist eine Antriebsvorrichtung für eine Ein-/Ausstiegsvorrichtung für ein Fahrzeug des öffentlichen Personenverkehrs bekannt. Der dort vorgesehene Antrieb ist nicht selbsthemmend, so dass eine zusätzliche Blockade des Antriebs erforderlich ist, welche in einem nichtbestromten Zustand des Antriebs eine mechanische Verriegelung des Antriebs bewirkt. Diese zusätzliche Bremse ist mechanisch und manuell entriegelbar.

### Aufgabe der Erfindung

Davon ausgehend ist es Aufgabe der Erfindung, eine Sicherheitsabsperrung in der Gestalt einer automatisiert bzw. motorisch angetriebene Schrankenanlage und eine Antriebseinheit für eine solche Schrankenanlage vorzusehen.

### Darstellung der Erfindung

Diese Aufgabe wird mit einer Antriebseinheit mit den Merkmalen des Anspruchs 1 gelöst. Bevorzugte Ausführungsformen sind in den abhängigen Ansprüchen angegeben.

So enthält eine Antriebseinheit für einen faltbaren Sicherheitsschrankenbaum einen Antriebsmotor, eine Gewindespindel, die mit dem Antriebsmotor derart gekoppelt ist, dass die Rotationsbewegung des Ausgangs des Antriebsmotors auf die Gewindespindel übertragen wird, und die mit einer Spindelmutter derart gekoppelt ist, dass sie bei einer Rotation der Gewindespindel eine lineare Bewegung entlang der Gewindespindel bzw. einer zur Gewindespindel parallel angeordneten Schlittenführung ausführt, einen Schlitten, der mit der Spindelmutter fest verbunden ist, und ein Kopplungsgelenk, insbesondere in Form einer Koppelstange, das gelenkig am Schlitten zum gelenkigen Koppeln des Schlittens mit einem Schrankenarm des Sicherheitsschrankenbaums angebracht ist. Mit diesem Aufbau kann eine kompakte und gleichzeitig robuste Antriebseinheit geschaffen werden, die in einer Sicherheitsabsperrung, z.B. in einem Schrankenbaum aus robustem Kunststoff untergebracht werden kann und gleichzeitig vollautomatisch bedienbar ist. Dadurch ist es möglich, einen Schrankenbaum motorisch zu öffnen und zu schließen, und somit Arbeitsabläufe effizienter zu gestalten.

Bevorzugter Weise enthält die Antriebseinheit weiter eine Wellenkupplung, die zwischen dem Antriebsmotor und der Gewindespindel vorgesehen ist zur Übertragung der Rotationsbewegung des Ausgangs des Antriebsmotors auf die Gewindespindel. Dadurch kann die Kopplung zwischen dem Antriebsmotor und der Gewindespindel einerseits stabil erfolgen, d.h. die Rotationsbewegung des Ausgangs des Motors stabil auf die Gewindespindel übertragen werden, eine robuste und einfache Kopplung vorgesehen werden und gleichzeitig, wenn gewünscht, ein gewisses axiales und/oder radiales Spiel vorgesehen bzw. Toleranzen davon kompensiert werden.

Zur kompakten und robusten Bauweise der Antriebseinheit trägt ferner bei, wenn bevorzugter Weise der Antriebsmotor ein Planetenradgetriebemotor ist, der die benötigten Drehmomente bei kompakter Bauweise bereitstellen kann. Dabei hat der Planetenradgetriebemotor vorzugsweise eine Bremse, um eine Feststellung der Schrankenposition zu ermöglichen.

Vorzugsweise ist das Kopplungsgelenk eine Koppelstange, d.h. ein an beiden Enden gelenkig gelagerter Stab, der den Angriffspunkt der Kraft in und gegen die Wirkrichtung der Kraft verschiebt, und zwar vom Schlitten in den Schrankenarm und umgekehrt. Dies ermöglicht eine robuste und kompakte Kopplung und Kraftübertragung zwischen Schlitten und Schrankenarm.

Da beim Öffnen des Schrankenbaums in der Regel die Schwerkraft überwunden werden muss und umgekehrt in der Regel beim Schließen des Schrankenbaums die Schwerkraft unterstützend wirkt, ist es vorteilhaft, dass die Antriebseinheit weiter ein Federelement bzw. -paket enthält, das den Schlitten in einer Richtung zum Unterstützen einer Öffnung des Schrankenbaums vorbelastet. Wenn z.B. eine Bewegung vertikal nach unten zu einer Öffnung des Schrankenbaums durch Schwenken und Zusammenfalten vertikal nach oben führt, ist das Federelement bzw. -paket derart vorgesehen, dass es den Schlitten vertikal nach unten zieht. Ein solches Federelement bzw. -paket kann beispielsweise ein Paket aus Zugfedern, vorzugsweise Schraubenzugfedern sein. Zum Beispiel können zwei oder mehrere Schraubenzugfedern als Pakete vorgesehen sein, die symmetrisch angebracht sind und den Schlitten in einer Richtung vorbelasten, die der Öffnungsrichtung des Schrankenbaums entspricht. Damit ist die Kraft, die der Motor zum Öffnen bzw. Schließen des Schrankenbaums aufbringen muss, ausgeglichener.

Die Antriebseinheit enthält weiter eine Notentriegelung, mit der bei Stromausfall, Defekten oder Sicherheitsanforderungen die Schranke von Hand bedient werden kann. Dazu ist der Antriebsmotor mit einer Bremse mit Handlüftung ausgestattet. Durch mechanische Betätigung der Notentriegelung wird die Bremse gelüftet und die Rotation des Motors ermöglicht. Da die Gewindespindel keine Selbsthemmung aufweist, lässt sich der Schrankenbaum von Hand bewegen.

Bei einem Sicherheitsschrankenbaum mit einer Antriebseinheit ist vorzugsweise ein Standpoller vorgesehen und die Antriebseinheit in dem Standpoller untergebracht. Dann muss die Antriebseinheit nicht mitbewegt werden und kann platzsparend und kompakt in dem Standpoller des Sicherheitsschrankenbaums untergebracht werden.

In einer bevorzugten Ausführungsform weist der Sicherheitsschrankenbaum einen Schrankenarm auf, der gelenkig mit dem Kopplungsgelenk bzw. der Koppelstange der Antriebseinheit gekoppelt ist. Alternativ weist der Sicherheitsschrankenbaum bevorzugt einen ersten und einen zweiten Schrankenarm auf, wobei der erste Schrankenarm gelenkig mit dem Kopplungsgelenk bzw. der Koppelstange der Antriebseinheit gekoppelt ist und der zweite Schrankenarm mit dem Standpoller gelenkig verbunden ist. Der erste und der zweite Schrankenarm sind an ihren vom Standpoller entfernten Enden miteinander über ein Verbindungselement gelenkig gekoppelt. Das führt dazu, dass durch zwei Schrankenarme eine gute Absturzsicherung oder ähnliches in verschiedenen Höhen vorgesehen werden kann und gleichzeitig durch die Verbindung der beiden Schrankenarme und deren Leichtbauweise ein einziger Antrieb und die Einleitung der Kraft in einen der beiden Schrankenarme ausreichend ist, um den Schrankenbaum durch Schwenken und Falten zu öffnen und zu schließen.

Das Folgende sind weitere Aspekte der vorliegenden Erfindung:
1. Antriebseinheit für einen faltbaren Sicherheitsschrankenbaum, enthaltend
   einen Antriebsmotor;
   eine Gewindespindel, die mit dem Antriebsmotor derart gekoppelt ist, dass die Rotationsbewegung des Ausgangs des Antriebsmotors auf die Gewindespindel übertragen wird, und die mit einer Spindelmutter derart gekoppelt ist, dass sie bei einer Rotation der Gewindespindel eine lineare Bewegung entlang einer Schlittenführung ausführt; einen Schlitten, der mit der Spindelmutter fest verbunden ist; und
   ein Kopplungsgelenk, insbesondere eine Koppelstange, das gelenkig am Schlitten angebracht ist, zum gelenkigen Koppeln des Schlittens mit einem Schrankenarm des Sicherheitsschrankenbaums.
2. Antriebseinheit nach Aspekt 1, weiter enthaltend eine Wellenkupplung, die zwischen dem Antriebsmotor und der Gewindespindel vorgesehen ist zur Übertragung der Rotationsbewegung des Ausgangs des Antriebsmotors auf die Gewindespindel.
3. Antriebseinheit nach einem der vorhergehenden Aspekte, wobei der Antriebsmotor ein Planetenradgetriebemotor ist.
4. Antriebseinheit nach Aspekt 3, wobei der Antriebsmotor ein Planetenradgetriebemotor mit Bremse ist.
5. Antriebseinheit nach einem der vorhergehenden Aspekte, wobei das Kopplungsgelenk eine Koppelstange ist.
6. Antriebseinheit nach einem der vorhergehenden Aspekte, weiter enthaltend ein Federelement, das den Schlitten in einer Richtung zum Unterstützen einer Öffnung des Schrankenbaums vorbelastet.
7. Antriebseinheit nach Aspekt 6, wobei das Federelement ein Paket aus vorbelasteten Schraubenzugfedern ist.
8. Antriebseinheit nach einem der vorhergehenden Aspekte, weiter enthaltend eine Notentriegelung. Antriebseinheit nach Aspekt 8, wobei die Notentriegelung eine Handlüftung, eine Schubstange und eine Entriegelungseinrichtung umfasst, wobei die Handlüftung mit der Entriegelungseinrichtung mittels der Schubstange gekoppelt ist, und wobei durch eine Bewegung an der Entriegelungseinrichtung eine Rotation des Antriebsmotors ermöglicht wird.
9. Sicherheitsschrankenbaum mit einer Antriebseinheit nach einem der vorhergehenden Aspekte.
10. Sicherheitsschrankenbaum nach Aspekt 10 mit einem Standpoller, wobei die Antriebseinheit in dem Standpoller vorgesehen ist.
11. Sicherheitsschrankenbaum nach Aspekt 10 oder 11 mit einem ersten Schrankenarm, wobei der erste Schrankenarm gelenkig mit dem Kopplungsgelenk der Antriebseinheit gekoppelt ist.
12. Sicherheitsschrankenbaum nach Aspekt 11 mit einem ersten und einem zweiten Schrankenarm, wobei der erste Schrankenarm gelenkig mit dem Kopplungsgelenk der Antriebseinheit gekoppelt ist und der zweite Schrankenarm mit dem Standpoller gelenkig verbunden ist, und wobei der erste und der zweite Schrankenarm an ihren vom Standpoller entfernten Enden miteinander über ein Verbindungselement gelenkig gekoppelt sind.

### Kurze Beschreibung der Figuren

Nachfolgend wird die Erfindung rein beispielhaft an Hand der beigefügten Figuren beschrieben, in denen:
Fig. 1 einen erfindungsgemäßen Schrankenbaum in perspektivischer Ansicht zeigt;
Fig. 2 eine perspektivische, teilweise geschnittene Ansicht einer Ausführungsform der Antriebseinheit des Schrankenbaums zeigt; und
Fig. 3 eine perspektivische Detailansicht der Antriebseinheit, einschließlich von Federpaketen, aus Fig. 2 ist.

### Detaillierte Beschreibung bevorzugter Ausführungsformen

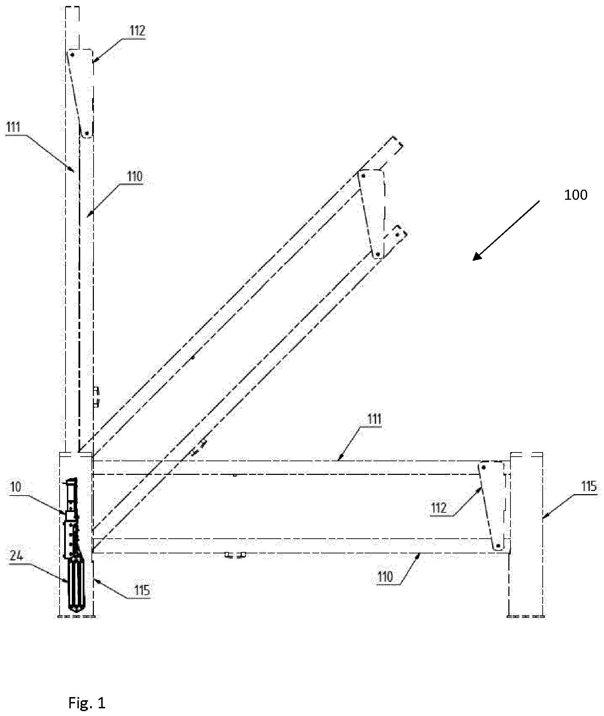

Fig. 1 zeigt beispielhaft einen erfindungsgemäßen Sicherheitsschrankenbaum 100, wobei zwei Standpoller 115 dargestellt sind. An einem der Standpoller 115 sind zwei Paare von Schrankenarmen 110, 111 vorgesehen. Einer der Schrankenarme 111 ist gelenkig, d.h. relativ drehbar, mit dem Standpoller 115 verbunden. Der andere der Schrankenarme 110 ist drehbar mit einer sich im Standpoller 115 befindenden und dort positions- und lagefest angebrachten Antriebseinheit 10 verbunden, so dass er ebenfalls relativ zum Standpoller 115 schwenkbar ist zwischen einer offenen Position des Sicherheitsschrankenbaums 100 und einer geschlossenen Position des Sicherheitsschrankenbaums 100.

Der Standpoller 115 steht auf dem Boden und erstreckt sich im Wesentlichen in vertikaler Richtung und die Schrankenarme 110, 111 erstrecken sich von diesem Standpoller 115 beabstandet zueinander in im Wesentlichen horizontaler Richtung weg, wenn der Sicherheitsschrankenbaum 100 geschlossen ist. Diese geschlossene Position des Sicherheitsschrankenbaums 100 ist in Fig. 1 durch die sich vom Standpoller 115 nach rechts in der Figur erstreckenden Schrankenarme 110, 111 gezeigt. Am dem Standpoller 115 abgewandten Ende der Schrankenarme 110, 111 sind diese mit einem gemeinsamen Verbindungselement 112 jeweils gelenkig, d.h. drehbar bezüglich des Verbindungselements 112 verbunden. In der geöffneten Position des Sicherheitsschrankenbaums 100 erstrecken sich die beiden Schrankenarme 110, 111 im Wesentlichen in Verlängerung des Standpollers 115 vertikal nach oben, wie es in Figur 1 ebenfalls gezeigt ist. D.h. die Schrankenarme 110, 111 werden zum Öffnen des Sicherheitsschrankenbaums 100 um ihre am Standpoller 115 bzw. der Antriebseinheit 10 im Standpoller 115 sich befindenden Gelenkpunkte gedreht bzw. geschwenkt und aus ihrer horizontalen geschlossenen Position in eine geöffnete, im Wesentlichen vertikale Position gebracht. Dazu ist der Standpoller 115 im Bereich der Antriebseinheit und bis zu seinem oberen Ende mit entsprechenden Öffnungen in seiner im Wesentlichen zylindrischen Form, d.h. mit Öffnungen in der Mantelfläche des Kreiszylinders und der oberen Stirnfläche versehen bzw. in diesem Bereich als Halbzylinder mit einem Halbkreis als Grundfläche, die der oberen Stirnfläche entspricht, versehen.

In einem gemeinsamen Standpoller 115 können die Antriebseinheiten 10 für zwei oder mehrere Schrankenarmgruppen mit Schrankenarmen 110, 111 vorgesehen sein, oder es kann auch für jede Antriebseinheit 10 ein separater Standpoller 115 vorgesehen sein. Ferner können die der Antriebseinheit 10 entfernten Enden der Schrankenarme 110, 111 im geschlossenen Zustand des Schrankenbaums 100 mit einem benachbarten Standpoller 115 bündig sein und nach Bedarf und Wunsch darin geführt sein, oder aber als freies Ende gestaltet sein. Es kann eine beliebige Anzahl von Schrankenarmen 110, 111 jeweils eine Schrankenarmgruppe bilden, neben der in den Figuren dargestellten Anzahl von zwei Schrankenarmen 110, 111 für eine Schrankenarmgruppe, nämlich ein einziger Schrankenarm oder auch drei oder mehr im Wesentlichen zueinander parallele Schrankenarme.

Der Sicherheitsschrankenbaum 100, wie er in Fig. 1 dargestellt ist, dient als Rammschutz bzw. Sicherheitsabsperrung, um Arbeitsbereiche und Laderampen für Lkw mit Hilfe von flexiblen Kunststofftoren abzusichern. Daher sind Sicherheitsschrankenbäume, wie sie hier beschrieben und gezeigt sind, aus flexiblen Kunststoffen, die mechanischen Belastungen, wie z.B. Kollisionen mit Gabelstaplern, Stand halten können. Gleichzeitig sind solche Sicherheitsabsperrungen platzsparend ausgebildet, um nicht unnötigen Platz von Arbeits-, Lade- oder Lagerflächen einzunehmen. Entsprechend muss auch die Antriebseinheit 10, wie sie im Folgenden in Verbindung mit Fig. 1 bis 3 beschrieben wird, einerseits kompakt sein, dass sie in einem Standpoller 115 eines solchen Sicherheitsschrankenbaums 100 untergebracht werden kann, und andererseits gegenüber zumindest leichten Erschütterungen etc. robust sein, damit sie in Verbindung mit Stößen etc., die im Betrieb z.B. durch Kollisionen mit Gabelstaplern mit dem Schrankenbaum entstehen, nicht versagt.

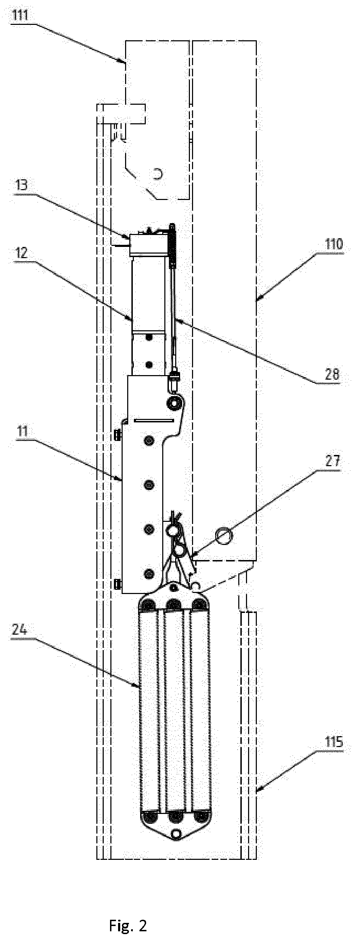

Wie in Fig. 2 gezeigt ist, ist dazu in einem oberen Bereich eines Standpollers 115, der nicht vollumfänglich geschlossen ist und nach oben hin offen ist, ein Gehäuse 11 der Antriebseinheit 10 vorgesehen, das sowohl fest mit dem Standpoller 115 verbunden ist als auch die Komponenten der Antriebseinheit 10 aufnimmt. Das Gehäuse 10 kann z.B. aus einem Leichtmetall gebildet sein und so die Antriebseinheit 10 gegenüber mechanischen Belastungen zusätzlich schützen.

Einer der beiden Schrankenarme 111 des Sicherheitsschrankenbaums ist an einem oberen Ende gelenkig, d.h. drehbar, mit dem Gehäuse 11 verbunden. Alternativ könnte dieser Schrankenarm auch direkt mit dem meist aus Kunststoff gebildeten Sicherheitspoller 115 gelenkig verbunden sein.

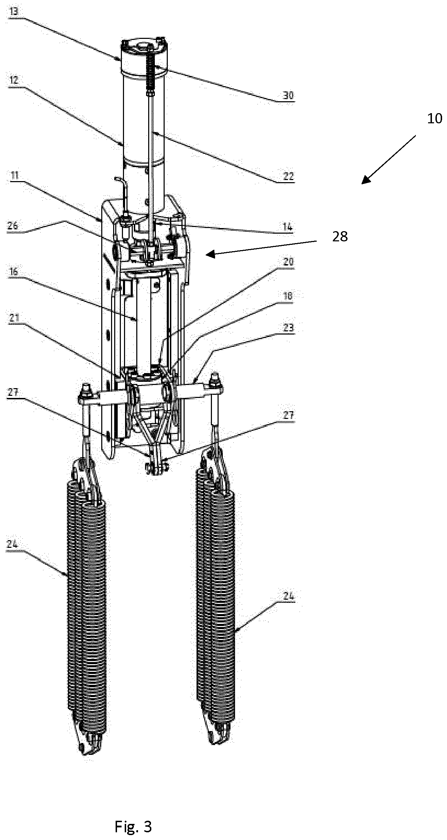

In dem Gehäuse 11 sind für die Antriebseinheit 10 ferner ein Antriebsmotor 12, der als ein Planetenradgetriebemotor 12 mit Bremse 13 ausgeführt ist, eine Gewindespindel 16, eine auf der Gewindespindel 16 laufende Spindelmutter 18 und ein Schlitten 20 vorgesehen. Am Schlitten 20 ist ferner gelenkig eine Koppelstange 27 als Kopplungsgelenk zum zweiten Schrankenarm 110 vorgesehen. Der Planetenradgetriebemotor als Antriebsmotor 12 kann, wie in Fig. 3 gezeigt ist, verhältnismäßig langgestreckt und damit kompakt gestaltet werden. Der Antriebsmotor 12 kann ferner einen externen Stromversorgungsanschluss bzw. eine Verbindung zu einer Stromversorgung aufweisen.

Wie in Fig. 3 zu erkennen ist, ist zwischen dem Antriebsmotor 12 und der Bremse 13, die im Einbauzustand den oberen Abschluss der Antriebseinheit 10 bilden, und der Gewindespindel 16 eine Wellenkupplung 14 vorgesehen, welche die Rotationsbewegung des Ausgangs des Antriebsmotors 12 auf die Gewindespindel 16 überträgt. Die Bremse 13, der Antriebsmotor 12, die Wellenkupplung 14 und die Gewindespindel 16 sind in dieser Reihenfolge von oben nach unten im Wesentlichen senkrecht übereinander in Einbaulage der Antriebseinheit 10 vorgesehen. Die Gewindemutter 18 und der damit verbundene Schlitten 20 sind zur Bewegung entlang der Gewindespindel 16 und um diese herum vorgesehen.

Bei einer Rotationsbewegung der Gewindespindel 16 führt die auf ihr laufende Spindelmutter 18 eine lineare Bewegung in Hoch-Tief-Richtung aus. Die Spindelmutter 18 ist ihrerseits fest mit dem Schlitten 20 verbunden, der somit ebenfalls eine lineare Bewegung der Spindelmutter 18 folgend ausführt. Im Gehäuse 11, parallel zur Gewindespindel 16, ist ferner eine Schlittenführung 21 vorgesehen, entlang derer der Schlitten 20 bei seiner linearen Bewegung läuft und die dadurch die Bewegung des Schlittens 20 stabilisiert und die Antriebseinheit robust macht. Figur 3 zeigt den Schlitten 20, wie er an der Spindelmutter 18 angebracht ist, und die Schlittenführung 21.

Ferner ist in Figur 3 ein Kopplungsgelenk 27 zu sehen, das relativ drehbar zum Schlitten 20 mit diesem gekoppelt ist und um eine Achse schwenken kann, die in Einbaulage im Wesentlichen horizontal verläuft. Das Kopplungsgelenk 27 ist als Koppelstange ausgebildet. Das andere Ende der Koppelstange, die das Kopplungsgelenk 27 bildet, ist mit dem Schrankenarm 110 des Sicherheitsschrankenbaums 100 gelenkig verbunden, wie am besten in Fig. 3zu erkennen ist.

Fig. 3 zeigt ferner ein Paar aus Schraubenzugfederpaketen 24, die zum Unterstützen der Bewegung der Schrankenarme 110, 111 aus der geschlossenen Position des Schrankenbaums 100 in die offene Position vorgesehen sind. Dazu sind die Schraubenzugfederpakete (in der dargestellten Ausführungsform mit jeweils drei Schraubenzugfedern) mit ihren oberen Enden symmetrisch am Schlitten 20 angebracht und an ihren unteren Enden mit einer Bodenplatte oder Ähnlichem (nicht dargestellt) fest verbunden, so dass sie den Schlitten 20 in der Richtung vertikal nach unten vorbelasten. Da eine Bewegung des Schlittens 20 von oben nach unten einer Öffnungsbewegung der Schrankenarme 110, 111 aus der Horizontalen in die Vertikale entspricht, bei der die auf die Schrankenarme 110, 111 wirkenden Schwerkraft überwunden werden muss, da die Schrankenarme 110, 111 nach oben schwenken, wirken die Federpakete 24, dass sie die Öffnungsbewegung unterstützen und somit einen Ausgleich in der aufzubringenden Kraft beim Öffnen und beim Schließen des Schrankenbaums schafft.

Fig. 3 zeigt weiter eine Notentriegelung 28 für die Antriebseinheit 10. Dazu ist der Planetenradgetriebemotor 12 mit einer Bremse 13 mit Handlüftung gekoppelt. Eine Schubstange 22 verbindet die Handlüftung der Bremse 13 mit einer Entriegelungseinrichtung 26. Die Entriegelungseinrichtung 26 ist im Gehäuse 11 der Antriebseinheit 10 gelagert und besteht aus einem Sechskantbolzen und einer exzentrischen Scheibe, wodurch eine exzentrische Verbindung zwischen Entriegelungseinrichtung 26 und Schubstange 22 hergestellt wird. Durch eine Drehbewegung am Sechskantbolzen wird eine lineare Hubbewegung in Richtung des Planetenradgetriebemotors 12 bzw. der Bremse 13 erzeugt, wodurch die Handlüftung der Bremse 13 betätigt wird. Ferner ist ein Federelement (Entriegelungsfederelement) 30 vorgesehen, welches als dämpfendes Element zwischen der Schubstange 22 und Handlüftung der Bremse 13 integriert ist. Dadurch wird die Betätigungskraft über den kompletten Hub der Schubstange 22 aufrechterhalten und die Konstruktion ist fehlersicherer bei der Montage. Ist zum Beispiel bei Stromausfall oder Defekt eine Notentriegelung des Systems erforderlich, oder aber als Sicherheitsanforderung um z.B. Brandschutzvorgaben zu erfüllen, kann der Sechskantbolzen von außen manuell betätigt bzw. gelöst werden, was die Handlüftung der Bremse 13 betätigt und das Bremsmoment der Bremse 13 löst, so dass die Schrankenarme 110, 111 manuell angehoben bzw. gesenkt werden können.

Wenn der Sicherheitsschrankenbaum 100 gemäß der hier beschriebenen Ausführungsform bedient wird, wird Strom in den Antriebsmotor 12 eingeleitet, was dazu führt, dass der Antriebsmotor 12 eine Rotationskraft und ein Drehmoment erzeugt, was in die Gewindespindel 16 über die Wellenkupplung 14 eingeleitet wird und dazu führt, dass sich die Gewindespindel 16 dreht. Die auf ihr laufende Spindelmutter 18 bewegt sich, da sie zusammen mit dem Schlitten 20 linear geführt ist, dadurch linear entweder nach oben (zum Schließen des Schrankenbaums) oder nach unten (zum Öffnen des Schrankenbaums), je nach Rotationsrichtung der Gewindespindel 16. Bei der Bewegung des Schlittens 20 nach unten unterstützen ferner die Federpakete 24 die Bewegung des Schlittens 20 und ziehen diesen ebenfalls nach unten, so dass die aufgebrachte Kraft zum Öffnen der Schrankenarme 110, 111 durch eine Schwenkbewegung nach oben verstärkt wird und somit die auf die Schrankenarme 110, 111 entgegen der Öffnungsbewegung wirkende Schwerkraft teilweise kompensiert wird. In der Schließrichtung der Schrankenarme 110, 111 wirken die Federpakete zwar entgegen der Bewegungsrichtung des Schlittens 20. Da aber die Schwerkraft in die Schließbewegung unterstützender Richtung wirkt, kann somit in beiden Bewegungsrichtungen eine ähnliche Motorkraft ausreichen, um die Schrankenarmbewegung mit einem kompakten Planetenradgetriebemotor auszulösen.

Mittels der Koppelstange als Kopplungsgelenk 27 wird die Kraft zum Öffnen und zum Schließen in einen der Schrankenarme 110 eingeleitet als Schub- bzw. Zugkraft und bewegt auf Grund der Stabanordnung zwischen Schrankenarmen 110, 111 und Verbindungselement bei einer Abwärts- bzw. Aufwärtsbewegung des Schlittens 20 die Schrankenarme 110, 111 zum Schwenken nach oben bzw. unten.

Der Erfindung liegt der Gedanke zu Grund, eine einfache und kompakte Anordnung für eine Antriebseinheit für eine Sicherheitsschrankenabsperrung zu schaffen, die dennoch für die im Betrieb auftretenden mechanischen Belastungen ausreichende Robustheit aufweist.

### Bezugszeichenliste

- 100: Sicherheitsschrankenbaum
- 110,111: Schrankenarm
- 112: Verbindungselement
- 115: Standpoller
- 10: Antriebseinheit
- 11: Gehäuse
- 12: Antriebsmotor
- 13: Bremse
- 14: Wellenkupplung
- 16: Gewindespindel
- 18: Spindelmutter
- 20: Schlitten
- 21: Schlittenführung
- 22: Schubstange
- 24: Federpaket
- 26: Entriegelungsreinrichtung
- 27: Koppelstange
- 28: Notentriegelung
- 29: Handlüftung
- 30: Federelement

## Patentansprüche

1. Antriebseinheit (10) für einen faltbaren Sicherheitsschrankenbaum (100), enthaltend einen Antriebsmotor (12);
eine Gewindespindel (16), die mit dem Antriebsmotor (12) derart gekoppelt ist, dass die Rotationsbewegung des Ausgangs des Antriebsmotors (12) auf die Gewindespindel (16) übertragen wird, und die mit einer Spindelmutter (18) derart gekoppelt ist,
dass sie bei einer Rotation der Gewindespindel (16) eine lineare Bewegung entlang einer Schlittenführung (21) ausführt;
einen Schlitten (20), der mit der Spindelmutter (18) fest verbunden ist; und
ein Kopplungsgelenk (27), insbesondere eine Koppelstange (27), das gelenkig am Schlitten (20) angebracht ist, zum gelenkigen Koppeln des Schlittens (20) mit einem Schrankenarm (110) des Sicherheitsschrankenbaums (100),
wobei die Antriebseinheit (10) weiter ein Federelement (24) enthält, das den Schlitten (20) in einer Richtung zum Unterstützen einer Öffnung des Schrankenbaums (100) vorbelastet, und das Federelement (24) ein Paket aus vorbelasteten Schraubenzugfedern ist; und wobei die Antriebseinheit (10) weiter eine Notentriegelung (28) enthält, die eine Handlüftung, eine Schubstange (22) und eine Entriegelungseinrichtung (26) umfasst,
wobei die Handlüftung mit der Entriegelungseinrichtung (26) mittels der Schubstange (22) gekoppelt ist, und wobei durch eine Bewegung an der Entriegelungseinrichtung (26) eine Rotation des Antriebsmotors (12) ermöglicht wird.

2. Antriebseinheit (10) nach Anspruch 1, weiter enthaltend eine Wellenkupplung (14),
die zwischen dem Antriebsmotor (12) und der Gewindespindel (16) vorgesehen ist zur Übertragung der Rotationsbewegung des Ausgangs des Antriebsmotors (12) auf die Gewindespindel (16).

3. Antriebseinheit (10) nach einem der vorhergehenden Ansprüche, wobei der Antriebsmotor (12) ein Planetenradgetriebemotor ist.

4. Antriebseinheit (10) nach Anspruch 3, wobei der Antriebsmotor (12) ein Planetenradgetriebemotor mit Bremse ist.

5. Antriebseinheit (10) nach einem der vorhergehenden Ansprüche, wobei das Kopplungsgelenk (27) eine Koppelstange ist.
